# EUROPEAN PATENT APPLICATION

(11) **EP 4 343 050 A1**
(43) Date of publication of application: **27.03.2024**
(21) Application number: 21940711.1
(22) Date of filing: 18.05.2021
(51) Int. Cl.: D06F 95/00

(54) **SELF-SERVICE LAUNDRY SYSTEM**

(71) Applicant: Wash-Plus Co., Ltd., Urayasu-shi, Chiba 279-0004 (JP)
(72) Inventor: TAKANASHI, Kentaro, Urayasu-shi, Chiba 2790004 (JP)
(74) Representative: Global IP Europe Patentanwaltskanzlei
(86) International application number: PCT/JP2021/018764
(87) International publication number: WO 2022/244094

(57) **Abstract**

[Problem] To provide a self-service laundry system that enhances user convenience and other benefits.

[Means for Solving the Problem] A self-service laundry system 1 installed in accommodation facility 2 equipped with a plurality of laundry machines 10, each equipped with at least one of the washing and drying functions, and server 23 that communicates with information terminal 31 installed in accommodation facility 2, and operates and controls laundry machine 10 according to the communication results. IC tag reader 15 provided on at least one surface of the plurality of laundry machines 10. Server 23 is equipped with a linkage means to link one information terminal 31 to one laundry machine 10 using IC tag reader 15, an operation command output means to output operation commands to laundry machine 10 linked to the information terminal 31, after the linkage, based on the operation request signals from information terminal 31.

## Description

### [Technical Field]

The present invention relates to a self-service laundry system, more specifically, concerns technology to enhance user convenience and other benefits.

### [Background Art]

Users visiting a coin-operated self-service laundry (so-called coin-operated laundry) are required to insert coins into the money-insertion machine, operate various settings and start button on washing machines and dryers to wash and dry clothes according to the number and type of clothes (see Patent Document 1).

Users may head outside to stores and restaurants to shop and eat while waiting for the washing machine or dryer to complete its operation (see Patent Document 2).

However, the conventional coin-operated laundries described above have various problems that need to be solved, as listed below.

When a washing machine or dryer does not work due to clogging of coins in the coin-insertion slot, users call the installation company from the phone inside the facility and request a refund, and addressing such complaints requires considerable effort and time.

There is a possibility of theft, as a relatively large quantity of coins accumulates in washing machines and dryers.

Female users are concerned that undergarments and other personal items being dried may be seen through the glass window of the door or stolen, making them hesitant to step out of the laundry while the dryer is in operation.

Users who have gone outside the laundry will not know when washing or drying is complete, due to which clothes are left unattended for a longer time, leading to a reduced utilization rate of the laundry machine.

Therefore, the inventor considered addressing these problems by devising a system that allows users to operate various functions of the laundry machine using a smartphone by installing specialized application software on the smartphone and sending notifications to the smartphone when the washing or drying process is complete.

However, since large-scale coin-operated laundries have many users operating a plurality of laundry machines simultaneously, even such a system is vulnerable to the possibility of multiple users trying to operate the same laundry machine due to input mistakes, etc., on the smartphone.

To solve such a problem, cited reference 3 discloses a technology in which a linkage unit is provided on at least one surface of the laundry machine and a controller that uses the linkage unit to link the smartphone of the user to one laundry machine and then outputs an operation command to the laundry machine linked to the smartphone based on an operation request signal received from the smartphone.

### [Prior Art Documents]

### [Patent Document]

[Patent Document 1] Unexamined Patent Publication No. 2001-129300
[Patent Document 2] Unexamined Patent Publication No. 2006-262942
[Patent Document 3] Republished Patent Publication No. 2019-077649

### [Summary of the Invention]

### [Problems to be Solved by the Invention]

The self-service laundry system described in cited reference 3 required users to carry a smartphone, which was inconvenient for certain users, such as the elderly and foreigners.

The purpose of the present invention is to provide a self-service laundry system that can enhance user convenience and other benefits in view of the above situation.

### [Means for Solving the Problems]

The self-service laundry system of the invention described in claim 1 is installed in a facility, characterized by being equipped with a laundry machine having at least one of the washing and drying functions and a controller that communicates with an information terminal installed in the facility and operates and controls the laundry machine based on the communication results, wherein the laundry machine is provided with a linkage unit and the controller uses the linkage unit to link the information terminal to the laundry machine and operates and controls the laundry machine based on the operation request signal from the information terminal.

The self-service laundry system of the invention described in claim 2 is characterized by being equipped with a plurality of laundry machines installed in a facility having at least one of the washing and drying functions, a controller that communicates with an information terminal installed in the facility and operates and controls the laundry machine based on the communication results, wherein at least one of the plurality of laundry machines is provided with a linkage unit and the controller has a linkage means to link one of the information terminals to one of the laundry machines using the linkage unit and an operation command output means to subsequently output an operation command to the laundry machine linked to the information terminal based on the operation request signal from the information terminal.

The self-service laundry system of the invention described in claim 3 is the self-service laundry system described in claim 2 characterized in that the facility is an accommodation facility where users stay overnight, wherein the information terminals are installed in a plurality of guest rooms of the accommodation facility, where the plurality of lodging rooms can be locked or unlocked by individual room keys and the linkage means links one of the information terminals to one of the laundry machine by authenticating the room key with the linkage unit.

The self-service laundry system of the invention described in claim 4 is the self-service laundry system, as described in claim 2 or claim 3, characterized in that the information terminal communicates with the controller using a predetermined web page accessed through a web browser.

### [Effect of the Invention]

According to the present invention, a plurality of laundry machines installed in the facility, with at least one of the washing and drying functions, communicates with an information terminal installed in the facility and operates and controls the laundry machine based on the communication results, thereby enhancing user convenience.

### [Brief Description of the Drawings]

[Fig. 1] Schematic diagram of the self-service laundry system according to the first embodiment.
[Fig. 2] Schematic diagram of the server according to the first embodiment.
[Fig. 3] Flowchart showing the overall operation of the self-service laundry system according to the first embodiment.
[Fig. 4] Front view of the display device showing the password input screen in the first embodiment.
[Fig. 5] Flowchart showing the procedure of the output control of operation command in the first embodiment.
[Fig. 6] Front view showing the display device when the information terminal of the guest room receives the recognition signal in the first embodiment.
[Fig. 7] Front view showing the display device when the information terminal of the guest room receives the operation cycle signal in the first embodiment.
[Fig. 8] Front view showing the display device when the information terminal of the guest room receives the payment signal in the first embodiment.
[Fig. 9] Flowchart showing the procedure of the completion warning process in the first embodiment.
[Fig. 10] Front view showing the display device when the information terminal of the guest room receives the first completion warning signal in the first embodiment.
[Fig. 11] Front view showing the display device when the information terminal of the guest room receives the second completion warning signal in the first embodiment.
[Fig. 12] Flowchart showing the error handling procedure in the first embodiment.
[Fig. 13] Front view showing the display device when the information terminal of the guest room receives the error signal in the first embodiment.
[Fig. 14] Schematic diagram of the self-service laundry system according to the second embodiment.
[Fig. 15] Schematic diagram of the self-service laundry system according to the third embodiment.

### [Description of the Embodiments]

### [First embodiment]

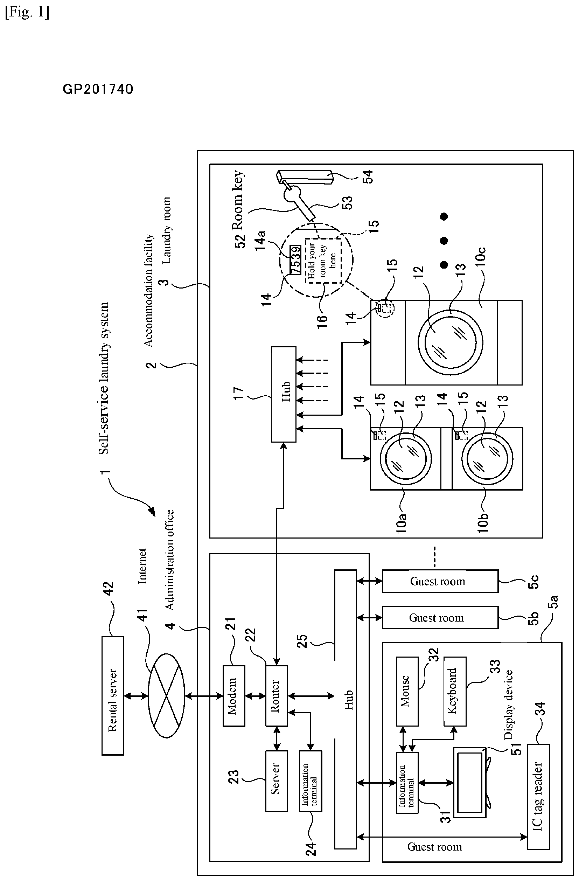

The first embodiment of the present invention is explained in detail with reference to Fig. 1 to Fig. 13. The first embodiment is characterized by the transmission of an operation request signal from the smartphone to the controller by key authentication, web pages and the Internet and the fee payment is paid by credit card.

### <Configuration of the First Embodiment>

Fig. 1 shows the schematic diagram of the self-service laundry system according to the first embodiment.

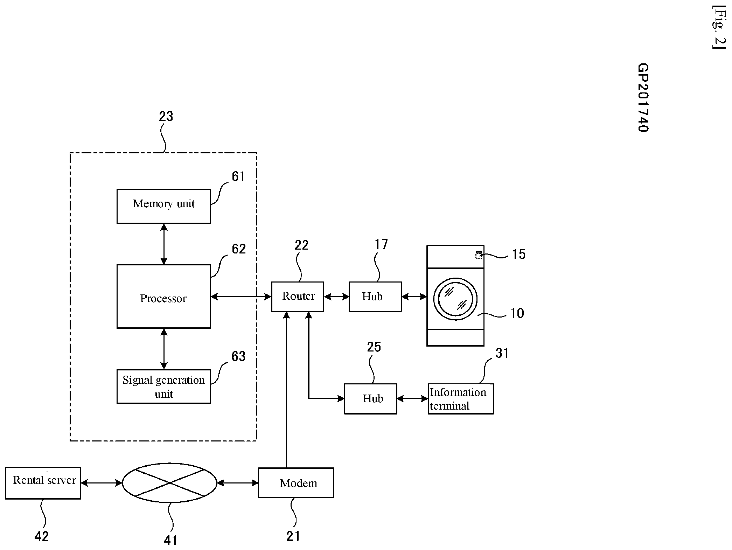

Fig. 2 shows the schematic diagram of the server according to the first embodiment.

### <Overall Configuration of the Self-service Laundry System>

As shown in Fig. 1, self-service laundry system 1, according to the first embodiment, comprises a plurality of laundry machines 10 (10a, 10b, 10c ...) comprising washing machines, dryers, etc., and hub 17 installed in laundry room 3 of accommodation facility 2 (hotel, a Japanese inn, etc.); modem 21, router 22, server 23, information terminal 24 (personal computer, smartphone, etc. Hereinafter referred to as "administrator information terminal") for the administrator, and hub 25 installed in administration office 4 of accommodation facility 2; information terminal 31 (personal computer), mouse 32, keyboard 33, IC tag reader 34, and display device 51 (which serves as a television receiver and a personal computer monitor) installed in guest rooms 5 (5a, 5b, 5c, ...); room key 52 to lock and unlock the door of guest room 5 (5a, 5b, 5c ...), Internet 41, and rental server 42 installed in the facility of a telecom operator.

Each laundry machine 10 in laundry room 3 is connected to router 22 in administration office 4 via hub 17.

Router 22 in administration office 4 is connected to Internet 41 via modem 21, and Internet 41 is connected to rental server 42.

Server 23, information terminal 24, operated by the administrator of this system, and hub 25 are connected to router 22 in administration office 4. Hub 25 is connected to information terminal 31, installed in a plurality of guest rooms 5 (5a, 5b, 5c ...) and to IC tag reader 34, which serves as a key authentication system installed near the lock of the door of the plurality of guest rooms 5 (5a, 5b, 5c ...).

### <Configuration of the Laundry Room>

Each laundry machine 10 is equipped with display 14 that shows one-time password 14a as a unique identifier for each equipment, and IC tag reader 15 (linkage unit). One-time password 14a is a randomly generated 4-digit number, which changes at predetermined time intervals (for example, 30-second intervals). On the front face of laundry machine 10, label 16 that says "Hold your room key over here" is affixed at a location corresponding to IC tag reader 15.

Room key 52 consists of key body 53 and rod-shaped tag 54. IC tag is embedded in key body 53 or rod-shaped tag 54. Room key ID based on the IC tag in room key 52 is read by IC tag reader 15 when room key 52 is held over IC tag reader 15.

In the case of a receiver for short-range wireless communication with high security, a one-time password is not necessarily required.

Each laundry machine 10 is equipped with manually opening and closing door 13 with transparent glass window 12. Each laundry machine 10 is equipped with an electrically operated locking mechanism (not shown in the figure) to lock door 13, which locks door 13 in the closed state based on a command from server 23 installed in administration office 4. Glass window 12 is of instant dimming type using liquid crystals and can be instantly switched between transparent and opaque states based on commands from server 23.

### <Configuration of the Guest Room>

Guest rooms 5 (5a, 5b, 5c...) of accommodation facility 2 are installed with information terminal 31, which consists of a desktop computer, mouse 32, keyboard 33, IC tag reader 34, and display device 51.

Information terminal 31 is connected to mouse 32, keyboard 33, and display device 51.

IC tag reader 34 is installed near the door locks of the plurality of guest rooms 5 (5a, 5b, 5c ...).

Information terminal 31 and IC tag reader 34 are connected to server 23 via hub 25 and router 22 installed in administration office 4.

### <Configuration of the Administration Office>

Server 23 in administration office 4 is connected to Internet 41 via router 22 and modem 21, to rental server 42 via Internet 41, and to various predetermined web pages built on rental server 42.

### <Connection of the Information Terminal>

Information terminal 31 installed in guest room 5 of accommodation facility 2 is connected to router 22 via hub 25 in administration office 4, and from router 22 to Internet 41 via modem 21, and further to rental server 42 via Internet 41, and to various predetermined web pages built on rental server 42.

### <Connection of the Laundry Machine>

Each laundry machine 10 is connected to router 22 in administration office 4 via hub 17 and communicates from router 22 with server 23 and administrator information terminal 24 for the administrator of laundry room 3 of the accommodation facility 2.

### <Configuration of the Server>

As shown in Fig. 2, server 23 comprises memory unit 61 that stores operation modes, user information, etc.; processor 62 that performs judgment processing and signal output based on input signals, etc., from information terminal 31 and laundry machine 10 via rental server 42; and signal generator 63 that generates operation command signals to laundry machine 10, signals to information terminal 31 and administrator information terminal 24 based on the judgment results of processor 62.

### <Operation of the First Embodiment>

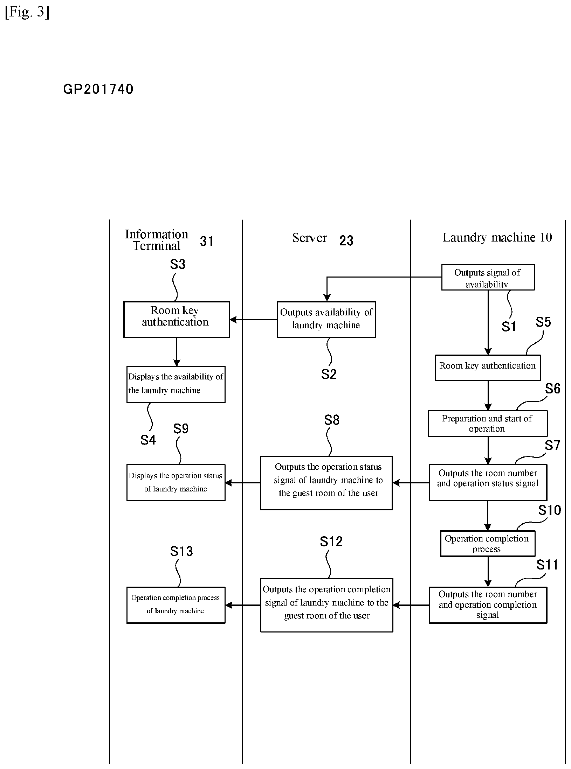

Fig. 3 is a flowchart showing the overall operation of the self-service laundry system according to the first embodiment.

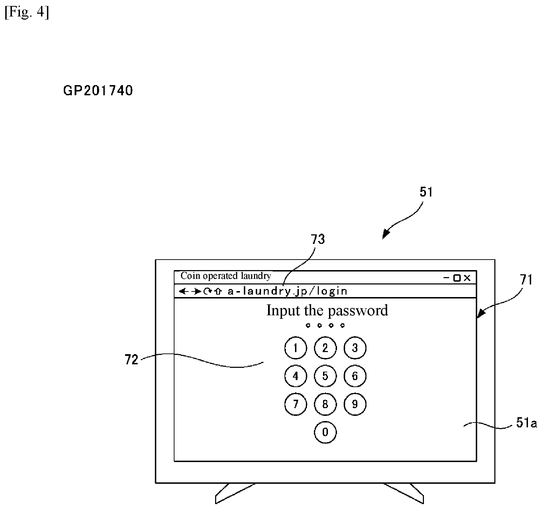

Fig. 4 is a front view of the display device showing the password input screen in the first embodiment.

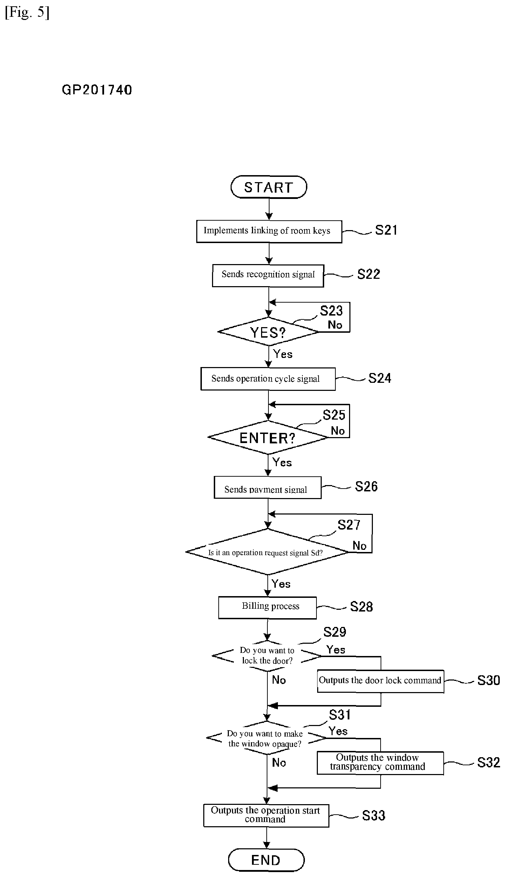

Fig. 5 is a flowchart showing the procedure of the output control of operation command in the first embodiment.

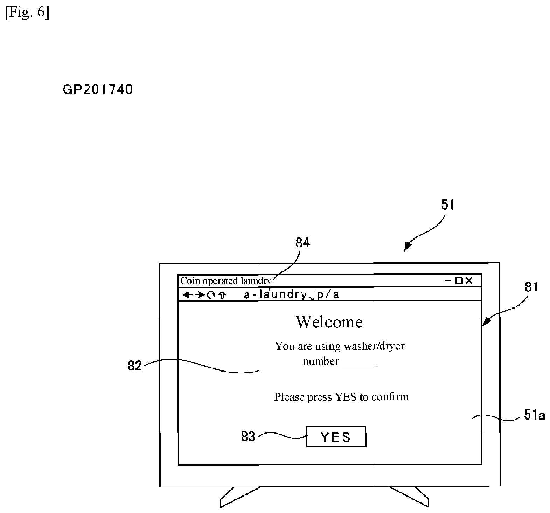

Fig. 6 is a front view showing the display device when the information terminal of the guest room receives the recognition signal in the first embodiment.

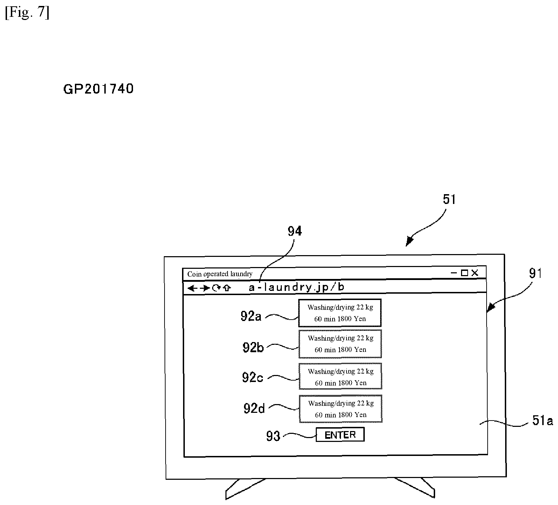

Fig. 7 is a front view showing the display device when the information terminal of the guest room receives the operation cycle signal in the first embodiment.

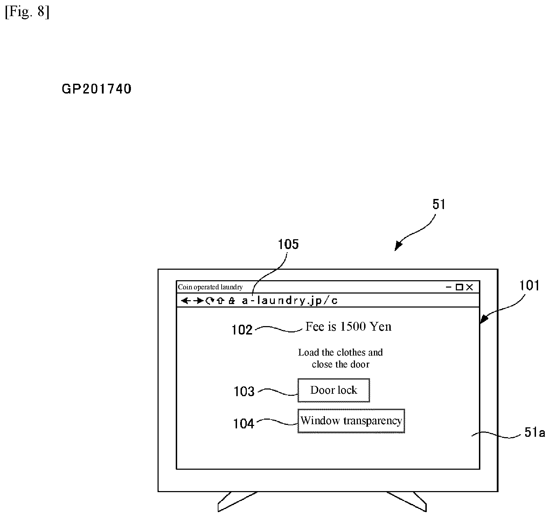

Fig. 8 is a front view showing the display device when the information terminal of the guest room receives the payment signal in the first embodiment.

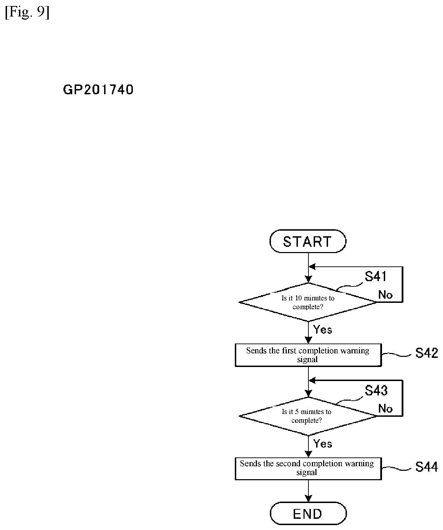

Fig. 9 is a flowchart showing the procedure of the completion warning process in the first embodiment.

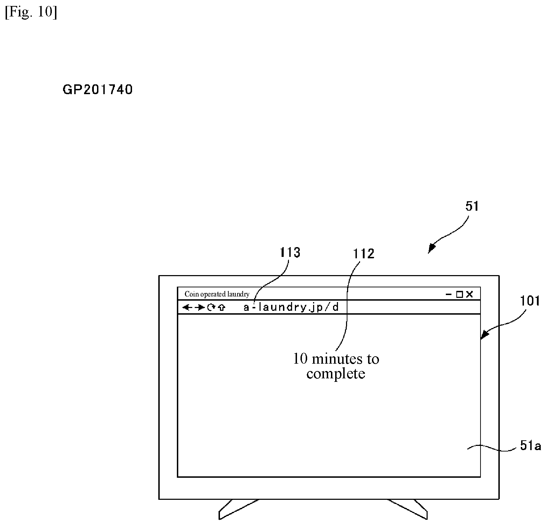

Fig. 10 is a front view showing the display device when the information terminal of the guest room receives the first completion warning signal in the first embodiment.

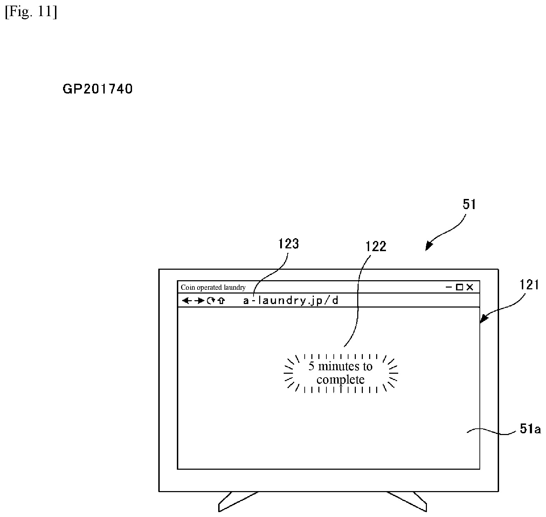

Fig. 11 is a front view showing the display device when the information terminal of the guest room receives the second completion warning signal in the first embodiment.

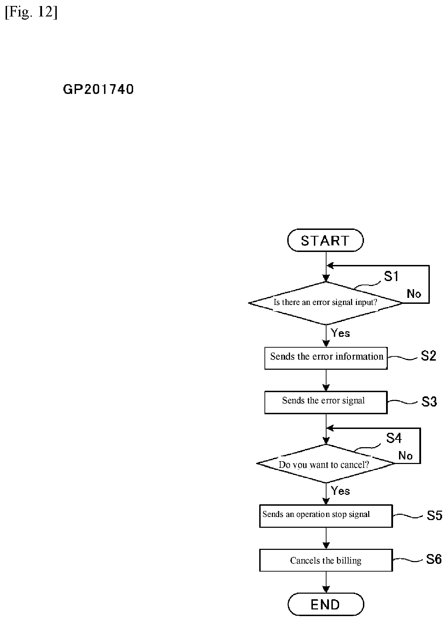

Fig. 12 is a flowchart showing the error-handling procedure in the first embodiment.

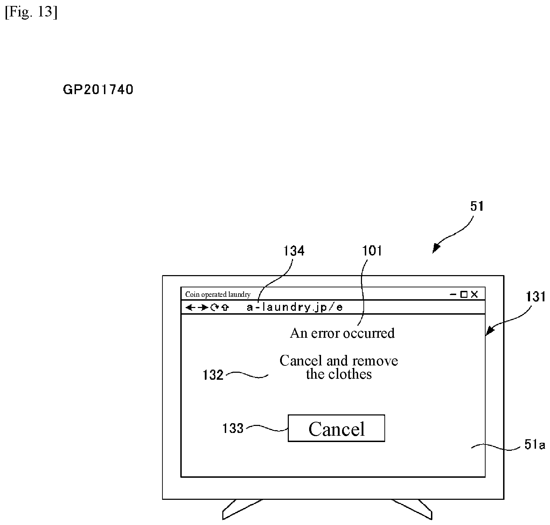

Fig. 13 is a front view showing the display device when the information terminal of the guest room receives the error signal in the first embodiment.

In Fig. 3, the exchange of signals and information between server 23 and laundry machine 10 is carried out via various predetermined web pages on rental server 42 accessed through a web browser. The exchange of signals and information between server 23 and information terminal 31 is also carried out via various predetermined web pages on rental server 42 accessed through a web browser.

When laundry machine 10 in laundry room 3 of accommodation facility 2 becomes available, as shown in step S1 of Fig. 3, a signal indicating the availability is transmitted to server 23 via hub 17, router 22 and modem 21 in the administration office 4, and Internet 41, via the 1st predetermined web page (not shown in the figure) built on rental server 42 accessed through a web browser.

With this, server 23, as shown in step S2 in Fig. 3, communicates with the 2nd predetermined web page (not shown in the figure) built on rental server 42 via router 22, modem 21 and Internet 41, and sends an output indicating the availability status of laundry machine to information terminal 31 via the 2nd predetermined web page.

When a user enters guest room 5 after checking into accommodation facility 2, the user will use room key 52 to unlock the door. With this, room key 52 is held over IC tag reader 34 of guest room 5, and as shown in step S3 of Fig. 3, identification signal Si1 corresponding to room key 52 and ID of the information terminal 31 for that guest room, is transmitted from IC tag reader 34 as room key authentication, this identification signal Si1 is input to server 23 via the 3rd predetermined web page built on rental server 42.

When identification signal Si1 is input to server 23, server 23 links room key 52 to information terminal 31 based on identification signal Si1. Meanwhile, as shown in step S4 in Fig. 3, information terminal 31 displays the availability status of laundry machine 10 on display device 51. This enables users to check the availability of laundry machine 10.

Next, users perform user registration using the 4th predetermined web page (built on rental server 42) accessed through a web browser on information terminal 31. User registration involves registering name, address, smartphone number, and payment information (credit card information) on server 23. User registration can be performed manually, or the registration information, etc., when checking into the accommodation facility 2 can be automatically linked to the information terminal 31. Thus, user registration enables issuing instructions given in the past and operations of laundry machine 10 without having to enter IDs, etc.

After this, when a user comes out of guest room 5 to use laundry machine 10 in laundry room 3 of the accommodation facility 2, the user selects laundry machine 10 according to the type and quantity of clothes to be washed or dried. Next, when the user holds room key 52 over IC tag reader 15 of laundry machine 10, as shown in step S5 in Fig. 3, identification signal Si2 corresponding to room key 52 and the ID of laundry machine 10 is transmitted from laundry machine 10 as room key authentication, and this identification signal Si2 is input to server 23 via the 5th predetermined web page built on rental server 42. The user needs to memorize or write down a one-time password 14a displayed on display 14 of laundry machine 10.

The user then returns to guest room 5 and uses information terminal 31 to display the 6th predetermined web page built on rental server 42 on the display device 51 through a web browser. The 6th predetermined web page can also be displayed automatically from the user registration. Then, as shown in Fig. 4, password input screen 72 is displayed employing the 6th predetermined web page (login page) 71 on display 51a of display device 51 through a web browser. The user enters a one-time password 14a, displayed on display 14 of laundry machine 10, on information terminal 31 using mouse 32 and keyboard 33. On the upper side of display 51a, there is display section 73, which shows the address of the 6th predetermined web page 71, etc.

On the other hand, when identification signal Si2 is input to server 23, as shown in step S21 of Fig. 5, server 23 links room key 52 with laundry machine 10 based on identification signal Si2, unless laundry machine 10 is in use by another user, and executes the procedure of output control of operation command shown in the flowchart of Fig. 5.

When the output control of operation command is initiated, as shown in step S6 of Fig. 3, laundry machine 10 prepares for and starts the operation, and as shown in step S7 in Fig. 3, outputs a room number signal indicating the room number of room key 52 and an operation status signal indicating the operation status of the laundry machine to server 23 via the 7th predetermined web page built on rental server 42. With this, server 23, as shown in step S8 in Fig. 3, outputs the operation status signal of laundry machine 10 to information terminal 31 of guest room 5 (guest room of the user of laundry machine 10) corresponding to the room number of room key 52 via the 8th predetermined web page built on rental server 42 accessed through a web browser. Information terminal 31, as shown in step S9 in Fig. 3, then displays the operation status of laundry machine 10 on display device 51 via the 9th predetermined web page built on rental server 42 accessed through a web browser. Users can confirm the operation status of laundry machine 10 with this.

Here, the operation status includes the status before the start of operation in Fig. 5. Server 23 sends the recognition signal in step S22 of Fig. 5 to information terminal 31 via the 10th predetermined web page built on rental server 42. On display device 51 connected to the information terminal 31 that received the recognition signal, as shown in Fig. 6, message 82, "Welcome You are using washer/dryer number_____ Please press YES to confirm" and "YES" button 83 are displayed on screen 51a of the 11th predetermined web page 81 built on rental server 42. On the upper side of display 51a, there is display section 84, which shows the address of the 11th predetermined web page 81, etc.

Server 23 judges whether the user pressed on the "YES" button 83 using mouse 32 in step S23 of Fig. 5, and if the judgment is Yes, it sends and receives signals to and from information terminal 31 via the 12th predetermined web page built on rental server 42 and sends the operation cycle signal to information terminal 31 in step S24 of Fig. 5. As shown in Fig. 7, display device 51 connected to information terminal 31 that received the operation cycle signal, displays "Operation Cycle" button 92 (92a-92d) corresponding to the selected laundry machine 10 and the "ENTER" button 93 on screen 51a through the 13th predetermined web page 91 built on rental server 42. On the upper side of display 51a, there is display section 94, which shows the address of the 13th predetermined web page 91, etc. The user selects the desired "Operation Cycle" button 92, depending on the type and number of clothes, and then presses the "ENTER" button 93.

Server 23 judges whether the user pressed on the "ENTER" button 93 in step S25 of Fig. 5, and if the judgment is Yes, the information terminal 31 and server23 send and receive signals via the 14th predetermined web page built on the rental server 42 and sends the payment signal to the information terminal 31 in step S26 of Fig. 5. When information terminal 31 receives the payment signal, as shown in Fig. 8, message 102 "Usage fee is _____ yen

Load the clothes and close the door", "Door Lock" button 103, and "Window Transparency" button 104 are displayed on screen 51a of the display device 51 by the 14th predetermined web page 101 built on rental server 42. On the upper side of display 51a, there is display section 105, which shows the address of the 14th predetermined web page 101, etc. The user can select (press) the "Door Lock" button 103 and "WindowTransparency" button 104 to lock door 13 or make glass window 12 opaque while laundry machine 10 is in operation.

When the user finishes confirming the usage fee and selecting the "Door Lock" button 103 and the "Window Transparency" button 104, an operation request signal Sd is transmitted by information terminal 31, and the operation request signal Sd is input to server 23 via the 15th predetermined web page built on rental server 42.

Server 23 judges whether the user has input the operation request signal Sd in step S27 of Fig. 5, and if the judgment is YES, the billing process is performed in step S28 of Fig. 5. The billing process is performed by communicating with the credit card company via Internet 41 based on the payment information mentioned above.

Once the billing in step S28 of Fig. 5 is complete, server 23 judges whether the user pressed the "Door Lock" button 103 in step S29 of Fig. 5, and if the judgment is Yes, the door lock command is output to laundry machine 10 via the 16th predetermined web page built on rental server 42 in step S30 of Fig. 5. As a result, laundry machine 10 locks the door.

Next, server 23 judges whether the user pressed the "Window Transparency" button 104 in step S31 of Fig. 5, and if the judgment is Yes, the window transparency command is output to laundry machine 10 via the 17th predetermined web page built on rental server 42 in step S32 of Fig. 5. As a result, laundry machine 10 makes the glass window 12 opaque.

After this, server 23, in step S33 of Fig. 5, outputs an operation start command to laundry machine 10 via the 18th predetermined web page built on rental server 42 and completes the operation start command control. Laundry machine 10, which receives the operation start command, initiates operation in the operation mode selected by the user, as shown in step S6 of Fig. 3.

Server 23 sequentially sends each command of the output control of operation command and results of the billing process to administrator information terminal 24. As a result, the administrator can recognize the operating status and sales of laundry machine 10 in laundry room 3 of the accommodation facility in real-time.

### (Completion Warning Process)

When laundry machine 10 starts operation, server 23 executes the completion warning process, and the flowchart in Fig. 9 shows the steps of the procedure. When the completion warning process starts, server 23 repeatedly judges at predetermined time intervals whether the time reached is 10 minutes before the operation end time in step S41 of Fig. 9. If this judgment is Yes, server 23 and information terminal 31 send and receive signals via the 19th predetermined web page built on rental server42, and server23 will send the first completion warning signal to the 19th predetermined web page in step S42 of Fig. 9. When information terminal 31 receives the first completion warning signal from the 19th predetermined web page, message 112 "10 minutes to complete" is displayed on screen 51a of display device 51 by the 20th predetermined web page 111 indicating that the time remaining to complete the operation is 10 minutes, as shown in Fig. 10 and plays a ring tone at a low volume. On the upper side of display 51a, there is display section 113, which shows the address of the 20th predetermined web page 111, etc.

Next, server 23 repeatedly judges at predetermined time intervals whether the time reached is 5 minutes before the operation end time in step S43 of Fig. 9. If the judgment is Yes, server 23 and information terminal 31 send and receive signals via the 21st predetermined web page built on rental server 42, and server 23 sends the second completion warning signal to the 21st predetermined web page in step S44 of Fig. 9. When information terminal 31 receives the second completion warning signal from the 21st predetermined web page, as shown in Fig. 11, displays message 122 "5 minutes to complete" intermittently on screen 51a of the display device 51 with the 22nd predetermined web page 121 indicating that the time remaining to complete the operation is 5 minutes, and activates ring tone and vibrator functions. On the upper side of display 51a, there is display section 123, which shows the address of the 22nd predetermined web page 121, etc.

When the operation completion time of laundry machine 10 is reached, server 23 outputs the operation completion command to laundry machine 10 via the 23rd predetermined web page built on rental server 42. Laundry machine 10, when the operation completion command is received, as shown in step S10 of Fig. 3, performs the operation completion process, makes glass window 12 transparent, unlocks the door lock, and sends the guest room signal and operation completion signal to server 23 via the 24th predetermined web page built on rental server 42.

Laundry machine 10, as shown in step S11 of Fig. 3, outputs the room number signal indicating the room number of room key 52 and the operation completion signal of the laundry machine to server 23 via the 25th predetermined web page built on rental server 42. With this, server 23, as shown in step S12 of Fig. 3, outputs the operation completion signal of the laundry machine to the guest room of the user of laundry machine 10 that corresponds to the room number of room key 52 via the 26th predetermined web page built on rental server 42, and information terminal 31, as shown in S13 of Fig. 3, flashes a message that the operation is finished on screen 51a of the display device 51, using the 27th predetermined web page built on rental server 42.

Making glass window 12 transparent and unlocking the door lock in step S10 of Fig. 3 can be selected by operations on the 28th predetermined web page displayed on the screen of display device 51 in laundry room 3 or guest room 5.

Server 23 continuously performs error handling procedures, as indicated in the flowchart of Fig. 12, in parallel with the output control of operation command.

### (Error Handling)

When error handling is started, server 23, in step S51 of Fig. 12, repeatedly judges at predetermined time intervals whether an error signal is input from laundry machine 10 in laundry room 3 of the accommodation facility.

For example, inputting an error signal to server 23 may lead to suspending the selected drying process of laundry machine 10.

If some error occurs in laundry machine 10 and the judgment of step S51 is Yes, server 23 and information terminal 31 send and receive signals via the 29th predetermined web page built on rental server 42, and server 23 sends the error information (what error occurred in which laundry machine 10) to administrator information terminal 24 and terminal (not shown in the figure) of the maintenance company in step S52 and an error signal to the 29th predetermined web page corresponding to information terminal 31 in step S53. If an error signal is received by the 29th predetermined web page, as shown in Fig. 13, message 132, "Error has occurred Cancel and remove the clothes", and "Cancel" button 133 are displayed on screen 51a of the display device 51 on the 30th predetermined web page 131 in laundry room 3 and guest room 5. On the upper side of display 51a, there is display section 134, which shows the address of the 30th predetermined web page 131, etc.

The administrator or maintenance company personnel goes to laundry room 3 of the accommodation facility in response to the error information to implement measures, such as suspending the usage of or repairing laundry machine 10. The user follows the screen display on the display device 51 and presses the "Cancel" button 92.

In addition, for example, the error information can be displayed on the user's smartphone, a phone call can be initiated (such as an automated voice message), and displayed on the display of the guest room or sent by email.

Users can take measures promptly based on the information.

In particular, users can download a dedicated application on their smartphones, and by utilizing this dedicated application, such as a display (and possibly audio in some instances), users can reliably detect issues occurring more reliably compared to methods like emails.

As a result, users can promptly take various measures (such as removing the clothes and putting them in other equipment), preventing, for example, the likelihood of discovering that the selected drying process has stopped when the users are about to leave the facility.

This is one of the advantages of a dedicated application since the probability of confirmation through methods such as notifications by email, without using dedicated applications, is lower.

Next, server 23 judges whether the "Cancel" button 102 is pressed in step S54 and repeats the judgment process of step S54 while this judgment is No. Server 23, when the user presses the "Cancel" button 102, and the judgment of step S54 is Yes, sends an operation stop signal in step S55 to laundry machine 10 via the 31st predetermined web page built on rental server 42.

The rotation of the washing and drying drums in laundry machine 10, which received the operation stop signal, stops, and if washing or rinsing is in progress, door 13 is unlocked after draining the water. The user can remove clothes from laundry machine 10 and wash or dry them in other laundry machines 10.

Next, server 23 cancels (refunds) the charges incurred through the billing process described in step S56 and terminates error handling.

### <Summary of the First Embodiment>

The following is a summary of the configuration and operations of the first embodiment of the present invention, which is characterized by a self-service laundry system 1 consisting of a plurality of laundry machines 10 (10a, 10b, 10c...) installed in a facility and having at least one of the washing and drying functions, the self-service laundry system is equipped with a controller (server 23) that communicates with information terminal 31 installed in the facility and controls the operation of the laundry machine according to the communication results, at least one of the plurality of laundry machines is equipped with a linkage unit (IC tag reader 15), the controller (server 23) has a linkage means (server 23 and a program executing step S21 in Fig. 5) to link one information terminal 31 and one laundry machine using the linkage unit (IC tag reader 15), after the linking, an operation command output means (server 23 and a program that executes steps S29-S33 in Fig. 5) to output an operation command to the laundry machine linked to information terminal 31, based on an operation request signal from information terminal 31.

The facility is an accommodation facility 2 where users stay, wherein the information terminal 31 is installed in a plurality of lodging rooms (guest rooms 5) in accommodation facility 2, the plurality of lodging rooms (guest rooms 5) can be locked and unlocked by individually corresponding room keys 52, and the linkage means is characterized by a linkage unit (IC tag reader 15) that authenticates room key 52, thereby linking one information terminal 31 to one of the laundry machines.

Information terminal 31 communicates with the controller (server 23) using a predetermined web page accessed through a web browser.

According to self-service laundry system 1 with this configuration, communication is performed between a plurality of laundry machines 10 installed in a facility (accommodation facility 2), each equipped with at least one washing or drying function, and information terminal 31 installed in the facility, laundry machine 10 is operated and controlled based on the communication results. Therefore, users need not carry a smartphone when using the system, which enhances user convenience.

A more detailed explanation of the convenience is that users of the facility (accommodation facility 2) can be notified of the completion time and the current usage status of laundry machine 10 by a TV (display device 51) or other systems inside the facility.

Users of the facility (accommodation facility 2) can use smart laundry functions such as locking the door and changing the window's transparency.

Furthermore, facility (accommodation facility 2) users can check the availability of laundry machine 10 before use.

Users can freely choose the form of use and respond without using smartphones or other special devices.

Since the fee is charged to the room, users need not carry many coins.

### [First Modification of the First Embodiment]

As a first modification of the first embodiment, the self-service laundry system is configured to allow reservations. User convenience is further enhanced with this.

### [Second Modification of the First Embodiment]

As a second modification of the first embodiment, the self-service laundry system is configured to perform drying additionally. User convenience is further enhanced with this.

### [Third Modification of the First Embodiment]

As a third modification of the first embodiment, the self-service laundry system is configured so that instructions can be given to fold and transport the clothes to the guest room using the system of accommodation facility 2. This modification allows personnel of accommodation facility 2 to make effective use of laundry machine 10 by removing the clothes even if the user does not come to pick up the laundry.

### [Fourth Modification of the First Embodiment]

As a fourth modification of the first embodiment, the self-service laundry system is configured to retrieve clothes previously removed and stored in a locker, etc., with a room key. In addition, the system can be configured so that removal and delivery of the clothes can be requested. If laundry machine 10 is unavailable or fully occupied, the clothes can be stored in the locker. User convenience is further enhanced with this.

### [Second Embodiment]

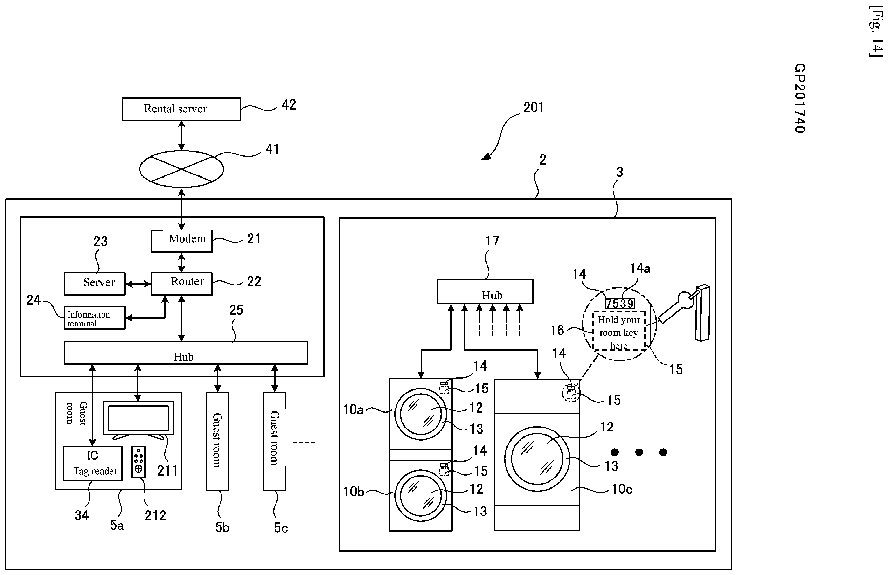

The second embodiment of the present invention is explained below in detail, referring to Fig. 14.

As shown in Fig. 14, self-service laundry system 201 of the second embodiment employs smart TV 211 and remote control 212 instead of the information terminal 31, mouse 32, keyboard 33, IC tag reader 34, and display device 51, constituting a desktop computer of the first embodiment.

Smart TV 211 is an information terminal, allowing the same communication as the information terminal 31 in Fig. 1 through remote control 212 and touch panel operations.

The above concludes the description of specific embodiments, but the present invention is not limited to these modes. For example, while the first and second embodiments implement billing through credit cards, prepaid cards, debit cards, and usage fees of smartphones can also be used. For example, while the second embodiment implements billing by prepaid card, implementation using credit cards, debit cards, and usage fees of smartphones is also possible. In addition, points may be awarded for each use of the laundry machine, which can be used to offset a portion of the usage fees. Although the predetermined web page accessed by the web browser was built on rental server 42, the predetermined web page may be built on server 23, installed in administration office 4, or an application may be built instead of the predetermined web page.

### [Third Embodiment]

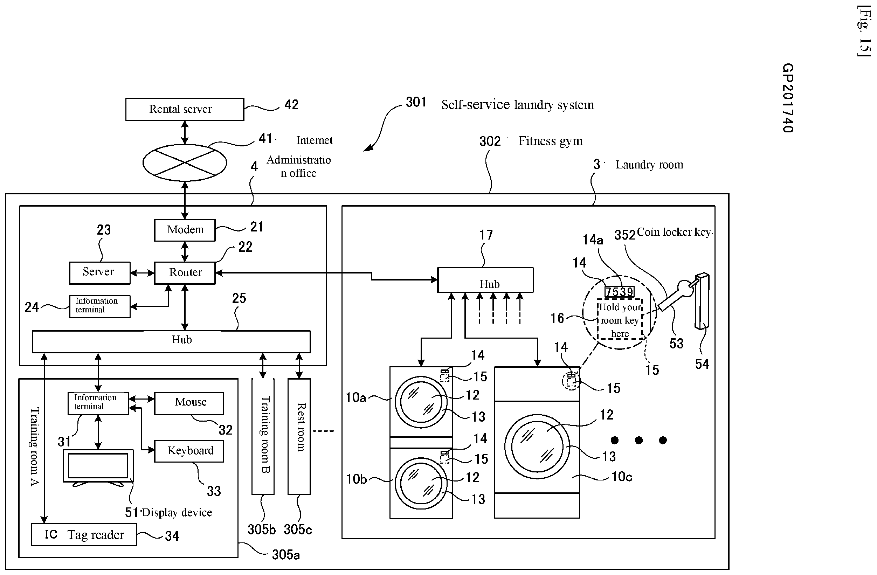

The third embodiment of the present invention is explained below in detail, referring to Fig. 15. The third embodiment applies the invention of the first embodiment to a fitness gym instead of an accommodation facility.

### <Configuration of the Third Embodiment>

Fig. 15 shows the schematic diagram of the self-service laundry system according to the third embodiment.

As shown in Fig. 15, the self-service laundry system 301 of the third embodiment consists of a plurality of laundry machines 10 (10a, 10b, 10c...) comprising washing machines, dryers, etc., installed in laundry room 3 of fitness gym 302 and hub 17; modem 21, router 22, server 23, administrator information terminal 24, and hub 25 installed in the administration office 4 of fitness gym 302; information terminal 31 (personal computer) mouse 32, keyboard 33, IC tag reader 34, and display device 51 (which serves as a television receiver and personal computer monitor) installed in each room for users (training A 305a, training A 305b, rest room 305c ...); coin locker key 352 to lock and unlock the coin locker doors in each room for users (training A305a, training A305b, rest room 305c ...), and Internet 41; and rental server 42 located at the facility of the telecom operator.

According to this configuration, the same effect as in the first embodiment shown in Fig. 1 to Fig. 13 can also be achieved with the self-service laundry system 301 used in fitness gym 302.

The application of the present invention is not limited to accommodation facilities and fitness gyms but also can be applied to various community centers, playground facilities (such as amusement parks), public baths, large public bathhouses, weekly apartments, rental homes with coin-operated laundries, hospitals, etc.

### [Industrial Applicability]

The self-service laundry system of the present invention can be effectively used by businesses and corporations that operate accommodation facilities, fitness gyms, various community centers, playground facilities, public baths, large public bathhouses, weekly apartments, rental homes with coin-operated laundries, hospitals, etc.

Furthermore, locker keys (shoe boxes, clothes lockers) can be used in addition to room keys.

In the case of locker keys, operations can be performed using various operation terminals within the facility.

In addition, users can perform operations with their smartphones. In this case, for example, an identification code (QR code (trademark), bar code) is assigned to the locker key, and the locker key is linked to the smartphone by recognizing the identification code with the smartphone camera, etc.

### [Explanation of the Reference Numerals]

- 1: Self-service laundry system
- 2: Accommodation facility
- 3: Laundry room
- 4: Administration office
- 5: Guest room
- 10: Laundry machine
- 11: Identification code (linkage unit)
- 12: Glass window
- 13: Door
- 14a: One-time password
- 15, 34: IC tag reader
- 17,25: Hub
- 21: Modem
- 22: Router
- 23: Server
- 24: Information terminal
- 31: Information terminal
- 32: Mouse
- 33: Keyboard
- 34: IC tag reader
- 41: Internet
- 42: Rental server
- 51: Display device

## Claims

1. A self-service laundry system installed in a facility comprising laundry machine that is **characterized by** being equipped with at least one of the washing and drying functions;
A controller that communicates with an information terminal installed in the facility and operates and controls the laundry machine based on the communication results;
A linkage unit is installed in the laundry machine; and
The controller
links the information terminal and laundry machine with the linkage unit and operates and controls the laundry machine based on the operation request signals from the information terminal.

2. A self-service laundry system installed in a facility comprising a plurality of laundry machines that is **characterized by** being equipped with at least one of the washing and drying functions;
A controller that communicates with an information terminal installed in the facility and operates and controls the laundry machine based on the communication results;
A linkage unit installed in at least one of the plurality of laundry machines;
The controller
with a linkage means links one information terminal to one laundry machine using the linkage unit; and after the linking, an operation command output means outputting operation commands to the laundry machine linked to the information terminal based on the operation request signal from the information terminal.

3. A self-service laundry system described in claim 2, wherein the facility is **characterized by** an accommodation facility where users stay;
An information terminal installed in a plurality of lodging rooms of the accommodation facility;
Wherein the plurality of lodging rooms can be locked and unlocked individually using corresponding room keys; and
A linkage means which links one information terminal to one laundry machine by authenticating the room key with the linkage unit.

4. A self-service laundry system described in claim 2 or claim 3 that is **characterized by** an information terminal communicating with the controller using a predetermined web page accessed through a web browser.
